# EUROPEAN PATENT APPLICATION

(11) **EP 4 252 985 A1**
(43) Date of publication of application: **04.10.2023**
(21) Application number: 22382296.6
(22) Date of filing: 29.03.2022
(51) Int. Cl.: B27D 1/04, B27J 7/00, B32B 7/03, B32B 7/12, B32B 21/06, B32B 21/14, B32B 29/06

(54) **PROCESS FOR THE MANUFACTURE OF A PLYWOOD PANEL, AND PLYWOOD PANEL OBTAINED BY THIS PROCESS**

(71) Applicant: Grupo Garnica Plywood, S.A., 26007 Logroño (La Rioja) (ES)
(72) Inventor: ALBIÑANA, Juan, 26007 Logroño (La Rioja) (ES); PASCUAL, David, 26007 Logroño (La Rioja) (ES); FERNANDEZ, Roberto, 26007 Logroño (La Rioja) (ES)
(74) Representative: Herrero & Asociados, S.L.

(57) **Abstract**

It allows to obtain in a simple and economical way a light and high quality plywood board, where the manufacturing process comprises stacking an odd number of poplar unrolled veneers, where the even veneers (11), which are the ones that receive an adhesive on both sides, have the grain perpendicular to the odd veneers (12), forming a plywood core (10) of veneers, such that on the top and bottom face of the plywood core (10) of the board (1) a layer of poplar wood paper is placed to form the face (20) and back (30) of the board (1), the plywood core (10) and the layers of wood paper of the face (20) and back (30) being finally pressed together.

## Description

### OBJECT OF THE INVENTION

The present invention pertains to the wood sector, and more specifically to wood veneering and plywood work.

The main objective of the present invention is a manufacturing process by which a lightweight, high quality plywood board is obtained in a simple and economical way, suitable for the manufacture of furniture for recreational vehicles and boats, such as caravans, yachts or the like.

### BACKGROUND TO THE INVENTION

At present, furniture for recreational vehicles and boats, such as caravans and yachts, is conventionally made from wood-based panels, of which poplar plywood is the most commonly used, due to its optimal weight/strength ratio.

The plywood board is formed by stacking an odd number of poplar 'unrolled' veneers, in which the even veneers (butts) are the ones that receive the adhesive on both sides and have the grain perpendicular to the odd veneers (cores). This stacking of veneers forms the core of the board, which is complemented by a top and bottom veneer, which form the face and back of the board, and the board is finished by applying heat and pressing the veneers together.

In the unrolling process, the logs are gripped at their ends by means of telescopic claws to which a rotary movement is applied and the log is pressed against a blade. In this way, a continuous sheet of wood of millimetre thickness is obtained. Subsequently, on the production line, the veneers are cut and sized for use in the manufacture of other products such as plywood, by gluing the even-numbered veneers together from a total of odd-numbered veneers, orienting the grain of these veneers so that they form a 90° angle with respect to their neighbouring veneer(s). In more detail, the traditional process of obtaining a plywood board comprises the following steps:
- Transport of the logs to the factory;
- Debarking of logs;
- Uncoiling of the logs by rotating the logs on a blade to obtain the respective veneers;
- Drying of the sheets;
- Gluing of the even sheets (cons) of the board to be obtained;
- Stacking of sheets, including face and back;
- Hot pressing of the plate assembly;
- Repair and application of plaster (repair putty) on the defects of the face and back;
- Board cross-cutting and calibration.

The plywood panels thus obtained have a high dimensional stability compared to a solid wood panel, and are the type of panel with the best weight/performance ratio (dimensional stability, mechanical strength, moisture resistance) compared to panels made of other materials or other wood-based panels, as well as being the only structural panel suitable for outdoor use and used in such aggressive environments as, for example, the nautical sector.

In addition, plywood for special applications such as caravans or yachts must be a light and very stable board, which is achieved by using very light poplar clones, selecting the veneers after very careful drying to obtain whole, defect-free veneers. At the same time, this type of board needs faces that allow a very good surface finish, suitable for covering with decorative wallpaper, whether paper, vinyl, polypropylene, etc., without surface defects.

The finished plywood boards, already covered with the decorative coating, are supplied to the RV manufacturer, who feeds the boards into a computer numerical control (CNC) machine in order to cut the different parts that make up the RV furniture, making maximum use of the board to make the furniture.

Computerised numerical control (CNC) machines require a very flat board, as if it were crooked it would not be possible to carry out the cutting correctly. A perfect surface finish is also required, so that all the resulting parts are valid and do not give rise to rejects that would entail a high replacement cost, as this part would have to be made manually.

Finally, optimum lightness is essential in this type of board, together with good mechanical resistance, because the heavier the recreational vehicle (caravan, yacht, etc.), the greater the fuel consumption for transporting it, and it is the light poplar clones that manage to combine both characteristics. This results in a board weighing between 400 and 450 kg per m³ , which is much lighter than other plywood boards (meranti, okume, pine or birch).

Other boards that are lighter than poplar, such as balsa wood, present problems of sustainability, as well as in the durability/strength ratio of the wood at the metal connection points (low resistance to screw pull-out).

Other desirable requirements for this type of boards are:
- Surface hardness, so that the laminated board is resistant to knocks and impacts, thus preventing the rapid deterioration of the components installed in the recreational vehicle.
- Lightweight, resulting in the lowest possible weight contribution to the recreational vehicle, thus contributing to lower fuel consumption during use and enjoyment.
- High resistance to screw pull-out, preventing deterioration of areas of the board subject to stress from moving parts or hinges.
- Board faces with not too pronounced colouring to avoid possible shade changes when using decorative papers of low grammage and opacity.
- Consistent thickness of the board, as there should be no differences in thickness within the same board, and between different boards in a batch, as the adhesive used for gluing the decorative coating would generate adhesion defects because it is not able to provide homogeneous adhesive.

Currently, a type of plywood board for recreational vehicles is known, consisting of a core of poplar inner veneers, a face and back of calaboose wood (*Pycnanthus angolensis*), which is a type of wood with superior hardness and surface quality to poplar, with fewer changes in tone and discolourations, and with fewer knots and cracks.

However, calabo, which costs more than poplar, is a tropical wood, with risks in supply and sustainability in harvesting, whereas poplar comes from sustainably managed plantations. Furthermore, the current trend in the availability and quality of calabó is decreasing, which will mean an increase in claims for surface quality defects, as well as an increase in cost and greater logistical difficulty.

To overcome the problem of such boards, another type of plywood board has been developed for special application in recreational vehicle furniture (caravans, yachts, etc.), which consists of finishing the board with thin MDF *(Medium Density Fibreboard)* faces and backing in thicknesses between 1.2 mm and 1.5 mm.

Thus, an MDF board is a panel made of wood fibres (which have been previously defibrated and lignin removed) agglutinated with synthetic resins by means of strong pressure and heat, until reaching a density of around 700 kg to 900 kg per m3 in the aforementioned thickness of 1.2 and 1.5 mm. MDF boards have a uniform and homogeneous structure and a fine texture that allows their faces and edges to have a perfect finish.

MDF panels can be processed in much the same way as solid wood and can be milled and cut in their entirety. In contrast to solid wood, the dimensional stability is excellent, but the weight is very high. It is an excellent base for veneers and is perfect for lacquering or painting, and is also easy to glue.

MDF board is usually medium-dark brown in colour and is a low-cost board, economical in today's market, which is used for a multitude of applications. It is recommended for the construction of all types of furniture where weight is not an important factor.

MDF boards are produced using mainly pine wood, namely selected and debarked logs from plantations generally managed under the concept of continuous and permanent reforestation. The logs (debarked and dried tree trunks) are reduced to chips (shredded wood), which are washed and then undergo a thermo-mechanical defibration process. The fibre is mixed with additives (resin, wax and urea) and finally undergoes a pressing process where pressure and temperature are applied to produce MDF board.

Regarding the application of MDF as a laminated product in the manufacture of components for recreational vehicles (caravans, yachts, etc.), it has the advantages of having high hardness and optimum surface quality superior to calaboose, without changes in tone or discolouration, without knots or cracks, and without the need to repair with repair putty (plaster), except for marks generated by dirt during the pressing process. However, MDF board has the disadvantages of being heavier and less resistant to humidity (greater swelling), as well as less resistance and durability in the removal of screws.

Therefore, there is a need in this field of technology for a process to obtain plywood boards for the manufacture of furniture for recreational vehicles, such as caravans or yachts, which allows to obtain boards with excellent mechanical properties, low weight, consistent thickness, high resistance to humidity, low manufacturing cost, high quality surface finish compatible with demanding coatings and gloss, and using wood from sustainable species.

### DESCRIPTION OF THE INVENTION

The present invention solves the above-mentioned disadvantages by providing a manufacturing process by means of which a light and high quality plywood board is obtained in a simple and economical way, suitable for the manufacture of recreational vehicle furniture, such as caravans, yachts or similar. The plywood board obtained by this process is also described.

More particularly, the process of the invention uses wood paper (perhaps better known as "Kraft' paper), of high grammage and impregnated with resins, to form the face and back of the board, which allows the boards obtained by the process of the invention to be light, of high quality and economical.

Thus, a first aspect of the invention relates to a process for manufacturing a plywood panel for recreational vehicle furniture, such as caravans or yachts, comprising stacking an odd number of poplar veneers that will constitute the core of the panel. In this core, the even veneers are the ones that receive the adhesive on both sides and have the grain perpendicular to the odd veneers.

Thus, the process of the present invention is characterised by the fact that a layer of poplar wood paper (or Kraft paper) is placed on the top and bottom face of the plywood core of the board to form the face and back of the board, and finally the veneers are pressed together.

Another aspect of the invention relates to a plywood board suitable for the manufacture of recreational vehicle furniture (caravans, yachts or similar), preferably obtained by means of the process described above, and comprising a plywood core formed by an odd number of poplar unrolled veneers, one face and one backing respectively arranged on the upper and lower surfaces of the core of the board. Thus, the board is notable for the fact that the face and back are made of wood paper (Kraft paper), each having a thickness of between 0,5 and 0,8 mm.

So far, in the wood industry, Kraft paper has been used exclusively in veneer processes, but not for the production of a high surface quality plywood board, in which by means of a single pressing process, wood paper (Kraft paper) replaces the existing high quality faces of tropical species such as calabo, meranti, etc.

Thus, the wood paper (Kraft paper) used in the present invention has been specially designed for this specific application, manufacture of recreational vehicle furniture, such as caravans or yachts, where said wood paper has a greater thickness than usual, in order to allow an adequate calibration of the platform. In addition, the wood paper of the invention is impregnated with resins specifically designed to prevent the telegraphing of defects that naturally occur in the poplar veneer underneath it.

Among the advantages of wood-based paper (or Kraft paper) are its consistency in colour, texture and structure.

Therefore, the finished plywood board with wooden paper face and backing (Kraft paper) of high grammage according to the invention for application as a laminated product in the manufacture of furniture components for recreational vehicles, such as caravans or yachts, has multiple advantages, among which the following stand out:
- Hardness and surface quality superior to calaboose.
- No knots, no cracks, and no need to repair with repair putty (plaster).
- Better moisture resistance than MDF board.
- Lighter than MDF board, as it is a thinner solution.
- Available in variable thicknesses allowing the cost/performance ratio to be adjusted according to the location/use of the furniture component in the recreational vehicle concerned.
- Made from plantation-grown, FSC-certified (*Forest Stewardship Council*) controlled wood.

### DESCRIPTION OF THE DRAWINGS

In order to complement the description being made and in order to assist in a better understanding of the features of the invention, in accordance with a preferred example of a practical embodiment thereof, a set of drawings is attached hereto as an integral part of said description, in which the following is illustrated for illustrative and non-limiting purposes:
Figure 1.- Shows a perspective view of a board portion according to the present invention.
Figure 2.- Shows a sectional view of the board of the invention, showing its different internal layers.

### PREFERRED EMBODIMENT OF THE INVENTION

An example of a preferred embodiment is described below, with reference to the above figures, without limiting or reducing the scope of protection of the present invention.

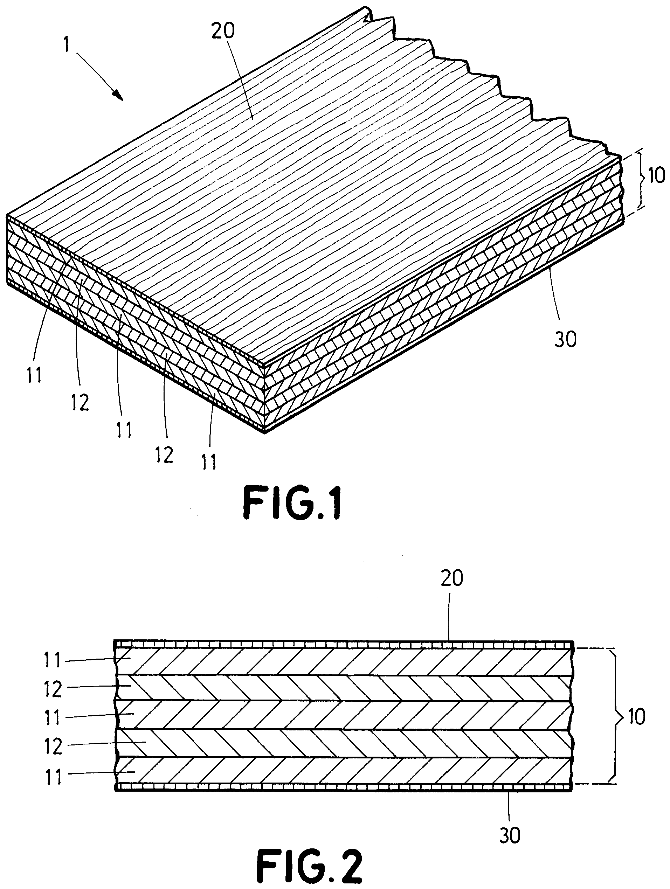

Figures 1 and 2 show a preferred embodiment of a plywood board (1) according to the present invention, comprising a plywood core (10) made up of an odd number of poplar veneers, preferably five veneers placed with the grain direction alternately opposite, so that three even veneers or "butts" (11), and two odd veneers or "cores" (12) are defined, as clearly shown in Figure 2.

The board further comprises a face (20) and a back (30) attached respectively to the top and bottom surfaces of the plywood core (10). Thus, as shown in figures 1 and 2, said face (20) and back (30) consist of wood papers ("Kraft" papers) impregnated with resin.

All these layers, plywood core (10), face (20) and back (30) are glued together, the plywood board (1) being obtained by the manufacturing process described above.

For the manufacture of this plywood board (1), of particular application for recreational vehicle furniture, such as caravans or yachts, and provided with a face (20) and back (30) of wood paper (Kraft paper) according to the invention, the manufacture of wood paper (Kraft paper) has been adapted for this particular use.

As mentioned above, wood-based paper (kraft paper) is conventionally intended for veneer manufacturing processes. In other words, the usual process by which wood-based paper (kraft paper) is used, mainly for boards intended for outdoor use, advertising, facades, etc., is as follows: A pre-existing platform with its corresponding wooden core, back, face and back, all of which are made of wood, is puttied to repair small surface defects, and then the platform is calibrated. The platform (finished board) is then covered with a wooden paper (Kraft paper).

For the present invention, use is made of the latest technology for the repair of existing defects in even veneers or "contras". Specifically, a repair filler has been developed for repairing defects in even veneers or "contras", instead of the traditional repair system with wood chips. In addition to the above, a thicker than usual wood paper (Kraft paper) has been designed, as well as impregnation resins that improve the anti-telegraphed properties of the paper, by means of which an efficient product/process is obtained, with the necessary quality in all the parameters described above: consistent thickness, surface hardness, ability to be sanded (sandability), compatibility with the adhesives that are subsequently used for lamination with the decorative coatings, etc.

The cost per m² of this wood paper (Kraft paper) is comparable to the best tropical veneers with the advantage of sustainability and guarantee of supply of wood paper (Kraft paper) compared to these tropical species. The density of the wood paper (Kraft paper) is around 900 kg/m³ , somewhat higher than tropical woods, but this is compensated by the fact that it is thinner, thus not impacting on the final density of the board.

On the other hand, the scratch hardness of the wood paper (Karaft paper) is increased, thus achieving an optimal compromise between the veneer thickness and its impact on the parameters: sandability (margin for calibration), anti-telegraphing (concealment of the micro-defects of the poplar veneer underneath), surface hardness, surface quality, cost and weight.

Thus, by means of this special design, adjustment and formulation of new resins, it is also achieved that the wood paper (Kraft paper) has an optimum behaviour in humid environments and a minimum emission of volatile organic compounds such as formaldehyde. In addition, the way in which the resin impregnates the paper must be complete and uniform so that the internal strength of the paper is not reduced, which would give it a low *internal bond* coefficient, which could result in a peeling failure when the coating is subjected to certain stresses.

As explained above, one of the stages of the manufacturing process is calibration, which seeks to unify the thickness across the entire surface of the board, since the sum of the tolerances of the thicknesses of the different sheets means that the board comes out of the press with "mountainous areas" (hills and valleys), creating differences in thickness within the board. Specifically, sizing manages to eliminate or reduce these differences, reducing the thickness of the thickness of the last faces, especially in the mountainous areas mentioned above. Finally, sanding reduces the roughness of the last veneer.

In the present invention, a new board finishing process has been developed in which the calibration and sanding sequence is adjusted to the thickness consistency needs of the final board, and thanks to the special interior repair system, a type of failure called "eaten faces" is avoided. This type of failure occurs when over-thicknesses or over-thicknesses are generated, such that the mountain areas generated exceed the thickness of the face, so that when the face is sanded/calibrated it disappears, leaving the even or "contra" poplar veneer that was underneath visible.

It has been required to improve the thickness tolerance of all the veneers that make up the board in order to reduce the thickness variability in each board, necessary to avoid thickness variations that would cause rejection in the customer's lamination process, and to reduce the total cost of the board, and thus allow the use of veneers of thicknesses lower than those used in calabo (0.5 to 0.7 mm in wood paper (Kraft paper) compared to 0.8 to 1 mm in calabo).

To this end, a number of improvements have been implemented on the unwinding line, including increasing the strength of the presser bar, changing the blade alloy to a harder one, sharpening the blade more frequently, optimising the angle of attack of the blade and reducing the log rotation speeds.

In the present invention, the composition of the glue used for the manufacture of the plywood board has also been adapted. Since conventional wood-based paper (Kraft paper) has a very high formaldehyde emission, it cannot be used as the resulting board would have a higher formaldehyde emission than allowed by European regulations, and especially the German regulations that apply to this product.

Wooden paper (Kraft paper) has a considerable amount of resin that gives it adhesive strength ("*web strength*") and strength, which currently causes a high emission of this gas regulated by the UNE 717 standard. To ensure that the plywood board of this invention complies with the regulations, the traditional manufacturing process has been modified in the following aspects:
- Replacing the natural resin with a resin with a very low molar ratio (Rm less than 1.2), the composition of which incorporates formaldehyde scavenger additives;
- Increasing the temperature in the press to promote a more complete crosslinking of the resin, a factor that requires greater control in the acclimatisation of the boards when they come out of the press, to prevent the board from twisting or bending.
- In addition, instead of repairing cracks and knots in the poplar veneer under the face with wood chips in the traditional way, an innovative system has been developed to repair such defects with a two-component filler.

## Claims

1. A process for manufacturing a plywood board (1) for recreational vehicle furniture, comprising stacking an odd number of poplar unrolled veneers, wherein the even veneers (11), which are the ones that receive an adhesive on both sides, have the grain perpendicular to the odd veneers (12), forming a plywood core (10) of veneers, **characterised in that** on the top and bottom face of the plywood core (10) of the board (1) a layer of poplar wood paper is placed to form the face (20) and back (30) of the board (1), and finally the set of veneers of the plywood core (10) and the layers of wood paper of the face (20) and back (30) are pressed so that they are joined together.

2. Manufacturing process according to claim 1, wherein the layers of wood-based paper that make up the face (20) and back (30) have a thickness of less than 0.8 mm.

3. Manufacturing process according to claim 1, wherein the layers of wood-based paper are impregnated with specially designed resins to provide the paper with the necessary properties of anti-telegraph capability, hardness, sandability, moisture resistance and low formaldehyde emission.

4. Manufacturing process according to any one of claims 1 to 3, wherein the thickness of the paper-wood layers is within the range 0.5 - 0.8 mm.

5. Manufacturing process according to claims 1 and 3, wherein the glue used to obtain the plywood core (10) and the wood paper layers of the face (20) and back (30) comprises formaldehyde binding additives and synthetic resins.

6. Manufacturing process according to claim 5, wherein the resins used have a molar ratio Rm less than 1.2 and formaldehyde scavenger additives.

7. Manufacturing process according to any one of the preceding claims, wherein the exposed faces of the wooden papers of the face (20) and back (30), after the pressing phase, are subjected to calibration and sanding.

8. Manufacturing process according to claim 3, wherein the plywood core veneers (10) have a thickness between 1 - 3 mm.

9. Manufacturing process according to claim 8, wherein the plywood core veneers (10) are made of poplar.

10. Manufacturing process according to claim 1, wherein the veneers of the board (1) come from the unrolling of sustainable wood logs.

11. Manufacturing process according to claim 1, wherein the plywood core (10) consists of five unrolled veneers of poplar logs.

12. Plywood board (1) suitable for the manufacture of recreational vehicle furniture, comprising a plywood core (10) consisting of an odd number of poplar veneers, a face (20) and a back (30) arranged respectively on the surfaces of the plywood core (10), **characterised in that** the face (20) and back (30) are layers of wood papers, wherein said layers of wood paper forming the face (20) and back (30) have a thickness of less than 0,8 mm.

13. Plywood panel (1) according to claim 11, wherein the wood-paper layers are made from certified sustainably sourced wood.
